# EUROPÄISCHE PATENTSCHRIFT

(11) **EP 1 084 018 B1**
(45) Veröffentlichungstag und Bekanntmachung des Hinweises auf die Patenterteilung: **17.07.2002**
(21) Anmeldenummer: 99926336.1
(22) Anmeldetag: 20.05.1999
(51) Int. Cl.: B29C 45/20, B29C 45/72

(54) **VORRICHTUNG UND VERFAHREN ZUM FEINGIESSEN VON FORMTEILEN AUS WACHS**
DEVICE AND METHOD FOR PRECISION CASTING OF WAX MOULDED PARTS
DISPOSITIF ET PROCEDE POUR LE MOULAGE DE PRECISION DE PIECES A MOULER EN CIRE

(30) Priorität: 29.05.1998 DE 19824129
(43) Veröffentlichungstag der Anmeldung: 21.03.2001
(73) Patentinhaber: Battenfeld GmbH, D-58540 Meinerzhagen (DE)
(72) Erfinder: BLEIER, Harald, A-2700 Wiener Neustadt (AT); HUBER, Andreas, A-1050 Wien (AT)
(86) Internationale Anmeldenummer: EP9903449
(87) Internationale Veröffentlichungsnummer: WO9962689

(56) Entgegenhaltungen:
- US-A- 4 934 921
- PATENT ABSTRACTS OF JAPAN vol. 013, no. 365 (M-859), 15. August 1989 (1989-08-15) & JP 01 122423 A (HITACHI METAL PRECISION LTD;OTHERS: 01), 15. Mai 1989 (1989-05-15)

## Beschreibung

Die Erfindung bezieht sich auf eine Vorrichtung zum Feingießen von Formteilen aus Wachs, die aufweist:
eine Plastifizier- und Einspritzschnecke, die in einem Schneckenzylinder rotieren und sich zum Einspritzen von plastifiziertem Wachs axial bewegen kann, und
ein Spritzgießwerkzeug, in das geschmolzenes Wachs eingespritzt wird.

Des weiteren betrifft die Erfindung ein Verfahren zum Feingießen von Formteilen aus Wachs in einer Spritzgießmaschine.

Für manche Fertigungsaufgaben ist es vorteilhaft, präzise geformte Wachsformteile zu haben, die beispielsweise im Rahmen eines Gießvorganges als ausschmelzbarer Kern bzw. Gießmodell dienen.

Wachs kann grundsätzlich in einer Spritzgießmaschine verarbeitet werden. Jedoch hat es sich gezeigt, daß bei der klassischen Benutzung einer Spritzgießmaschine bei der Wachsverarbeitung Probleme auftreten: Es ergibt sich dann nämlich, daß das Wachs im Gangbereich der Plastifizier- und Einspritzschnecke festklebt, so daß sich die Schneckengänge mehr und mehr zusetzen und gebrauchsuntüchtig werden. Die Anlagerung von Wachs kann weiterhin nachteilhafterweise auch an anderen Stellen der Spritzgießmaschine, beispielsweise im Bereich vor dem Werkzeug, erfolgen.

In der **JP-A-01,122 423** wird eine Einspritzschnecke, die zur Verarbeitung von Wachs vorgesehen ist, bei der das Wachs aufgeschmolzen wird, aber keine axiale Bewegung der Schnecke durchgeführt wird, um das geschmolzenen Wachs in ein Formnest einzubringen, gezeigt.

Aus der **US-A-4,934,921** ist die Verarbeitung von Wachs aus einem Vorratsbehälter bekannt. Aufgeschmolzenes Wachs wird aus diesem Behälter abgesaugt bzw. abgepumpt und über eine Einspritzvorrichtung abgegeben. Nachteilig bei den bekannten Verfahren ist es, daß das Wachs bereits längere Zeit aufgeschmolzen ist bevor es verarbeitet wird, es kommt dadurch zu thermischen Schäden.

Der vorliegenden Erfindung liegt daher die **Aufgabe** zugrunde, eine verbesserte Vorrichtung und ein Verfahren zum Feingießen von Formteilen aus Wachs zu schaffen, die bzw. das eine problemlose Verarbeitung von Wachs in sonst üblichen Spritzgießmaschinen ermöglicht.

Die **Lösung** dieser Aufgabe durch die Erfindung ist gekennzeichnet durch Mittel zum Kühlen der Plastifizier- und Einspritzschnekke (1), wobei diese Mittel aus einer Innenbohrung (4), die in die Plastifizier- und Einspritzschnecke (1) eingearbeitet ist, und aus Zuführ- (5) und Abführleitungen (6) für ein, vorzugsweise flüssiges, Kühlmedium bestehen, und durch einen Kühlkopf (7), der zwischen der Plastifizier- und Einspritzschnecke (1) und dem Spritzgießwerkzeug (3) angeordnet ist und der das aus dem Bereich der Plastifizier- und Einspritzschnecke (1) kommende Wachs mit einem, vorzugsweise flüssigem, Kühlmedium abkühlt, bevor es in das Spritzgießwerkzeug (3) gelangt.

Mit der Kombination der vorgeschlagenen Merkmale wird es überraschenderweise möglich, ein Festkleben von Wachs sowohl an der Schecke als auch an anderen Stellen der Spritzgießmaschiene zu verhindern und so konventionelle Spritzgießmaschinen für die Wachsverarbeitung ohne weitere Maßnahmen tauglich zu machen.

Gemäß einer ersten Weiterbildung ist vorgesehen, daß die Länge (LB) der Innenbohrung (4) höchstens 2/3 der Länge (LS) der Plastifizier- und Einspritzschnecke (1) beträgt. Ferner kann vorgesehen werden, daß in den Kühlkopf ein Sieb (8) integriert ist, das das hindurchtretende Wachs filtert, wobei auch das Sieb (8) von dem Kühlmedium gekühlt wird.

Die Plastifizier- und Einspritzschnecke (1) kann eine gehärtete Oberfläche aufweisen.

Besonders vorteilhaft arbeitet die Vorrichtung, wenn zwischen dem Endbereich der Plastifizier- und Einspritzschnecke (1) und dem Spritzgießwerkzeug (3) eine, vorzugsweise durch Federmittel, vorgespannte Nadelverschlußdüse (9) angeordnet ist, die das in das Spritzgießwerkzeug (3) einzuspritzende Wachs unter einem vorgegebenen Mindestdruck hält.

Schließlich ist vorteilhafterweise vorgesehen, daß der Schneckenzylinder (2) Mittel zum Heizen des Schneckenzylinders (2) aufweist, wobei diese Mittel aus Hohlräumen (10) bestehen, die in den Schneckenzylinder (2) eingearbeitet sind, in die ein, vorzugsweise flüssiges, Heizmedium eingeleitet wird, womit der Bereich der Bohrung des Schneckenzylinders (2) auf eine Temperatur, vorzugsweise zwischen 30 °C und 80 °C, aufgeheizt wird.

Das Verfahren zum Feingießen von Formteilen aus Wachs findet in einer Spritzgießmaschine statt, die aufweist: eine Plastifizier- und Einspritzschnecke (1), die in einem Schneckenzylinder (2) rotieren und sich zum Einspritzen von plastifiziertem Wachs axial bewegen kann, und ein Spritzgießwerkzeug (3), in das geschmolzenes Wachs eingespritzt wird.

Das Verfahren zeichnet sich erfindungsgemäß dadurch aus, daß die Plastifizier- und Einspritzschnecke (1) einerseits und der Schneckenzylinder (2) andererseits unabhängig voneinander in der Weise in ihrer Temperatur gesteuert oder geregelt werden, daß die Plastifizier- und Einspritzschnecke (1) während der Verarbeitung des Wachses zumindest in Teilbereichen der Plastifizier- und Einspritzschnecke (1) wärmer als der Schneckenzylinder (2) oder höchstens gleich warm ist.

Für die Temperierung von Schnecke bzw. Zylinder können die bereits beschriebenen Elemente eingesetzt werden.

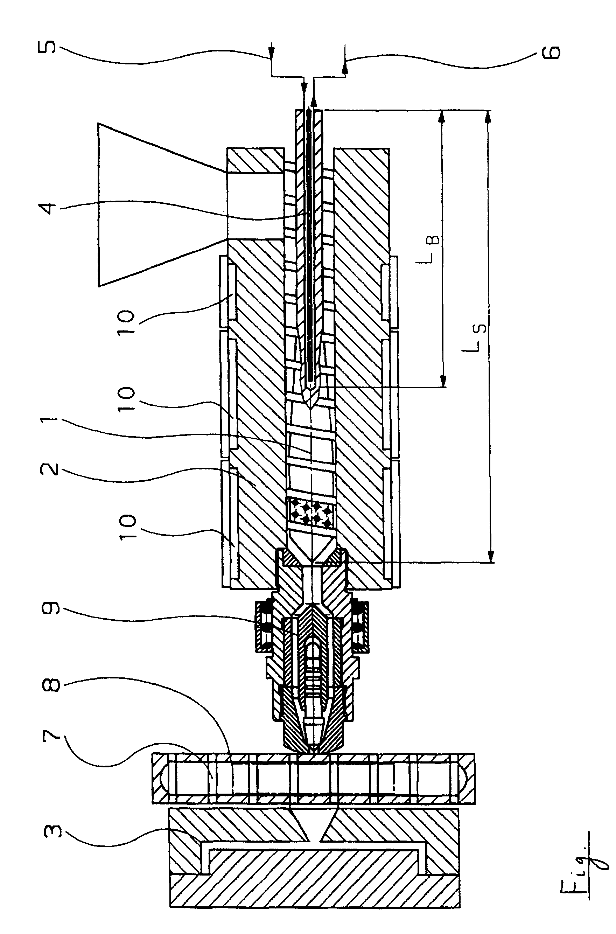

In der Zeichnung ist ein Ausführungsbeispiel der Erfindung dargestellt. Die Figur zeigt schematisch den Schnitt durch eine Spritzgießmaschine für die Verarbeitung von Wachs.

Eine Plastifizier- und Einspritzschnecke 1 ist rotierbar und axial verschieblich - wie beim klassischen Spritzgießen - in einem Schneckenzylinder 2 angeordnet. Im vorliegenden Falle wird Wachs über einen Einfülltrichter dem Schneckeneinzugsbereich zugegeben und aufgeschmolzen. Das Wachs wird dann in ein Spritzgießwerkzeug 3 eingespritzt.

Die Schnecke 1 weist eine Innenbohrung 4 auf. Diese steht sowohl mit einer Zuführleitung 5 als auch mit einer Abführleitung 6 in Verbindung. Über die Leitungen kann ein flüssiges, temperiertes Medium, vorzusweise Wasser, der Bohrung 4 zugeführt und aus ihr wieder abgeführt werden. Damit kann die Schnecke 1 temperiert werden.

Die Bohrung 4 erstreckt sich über eine Länge LB, während die Schnekke 1 die Länge LS aufweist. Vorzugsweise ist die Bohrungslänge geringer als 2/3 der Schneckenlänge.

Durch die Temperierung, namentlich die Kühlung, der Schnecke wird erreicht, daß sich kein Wachsmaterial in den Schneckengängen festsetzen bzw. dort festkleben kann.

Das plastifizierte bzw. aufgeschmolzene Wachs wird über einen Kühlkopf 7 dem Werkzeug 3 zugeführt. Der Kühlkopf ist in der Lage, das Wachs auf eine gewünschte Temperatur abzukühlen, um den Verfestigungsprozeß im Werkzeug zu optimieren. D. h. das Wachs wird in relativ warmem Zustand durch die Spritzgießvorrichtung geführt, unmittelbar vor der Injektion ins Werkzeug jedoch abgekühlt, so daß dort eine schnelle Erstarrung stattfinden kann. Im Kühlkopf 7 kann auch ein Sieb 8 angeordnet sein.

Eine besonders effiziente Verarbeitungsmöglichkeit ergibt sich dadurch, daß zwischen Schneckenvorraum und Werkzeug eine Nadelverschlußdüse 9 angeordnet ist. Diese ist über Federmittel vorgespannt, so daß ein Ausstoß von Wachs ins Werkzeug erst erfolgt, wenn ein hinreichender Druck im Schneckenvorraum herrscht. Es ist in diesem Zusammenhang zu erwähnen, daß es sich gezeigt hat, daß mit Spritzdrücken zwischen 5 und 50 bar gearbeitet wird. Das wird bei der Einstellung der Federmittel in der Nadelverschlußdüse in fachmännischer Weise berücksichtigt.

Zur Temperierung des Schneckenzylinders 2 sind Hohlräume 10 vorgesehen, die mit temperierter Flüssigkeit, vorzugsweise mit Wasser, versorgt werden, wobei die Versorgung der Hohlräume 10 mit Wasser nicht näher dargestellt ist.

Wie sofort zu sehen ist, ergibt sich daher die Möglichkeit, einerseits die Schnecke 1 und andererseits den Zylinder 2 separat und unabhängig voneinander zu temperieren. Dies erfolgt nach dem erfindungsgemäßen Verfahren in der Weise, daß die Schnecke 1 wärmer als der Zylinder 2 gehalten wird; beim klassischen Spritzgießen ist es - da die Wärme über die Heizbänder am Zylinder von außen eingeleitet wird - genau umgekehrt.

Die Temperierung der Schnecke erfolgt im Ausführungsbeispiel über entsprechend temperierte Flüssigkeiten. Grundsätzlich kann dies jedoch auch über andere Mittel, z. B. elektrisch oder induktiv, erfolgen.

Die beste Verarbeitungstemperatur von Wachs liegt - je nach Wachstyp - zwischen 30 °C und 80 °C. Entsprechend werden Schnecke 1 und Zylinder 2 temperiert, so daß sich dieser Temperaturbereich im Bereich der Bohrung des Schneckenzylinders 2 bzw. in den Schneckengängen einstellt.

### Bezugszeichenliste:

- 1: Plastifizier- und Einspritzschnecke
- 2: Schneckenzylinder
- 3: Spritzgießwerkzeug
- 4: Innenbohrung
- 5: Zuführleitung
- 6: Abführleitung
- 7: Kühlkopf
- 8: Sieb
- 9: Nadelverschlußdüse
- 10: Hohlräume im Schneckenzylinder

- LS: Länge der Plastifizier- und Einspritzschnecke
- LB: Länge der Bohrung in der Plastifizier- und Einspritzschnecke

## Patentansprüche

1. Vorrichtung zum Feingießen von Formteilen aus Wachs, die aufweist:
eine Plastifizier- und Einspritzschnecke (1), die in einem Schneckenzylinder (2) rotieren und sich zum Einspritzen von plastifiziertem Wachs axial bewegen kann, und
ein Spritzgießwerkzeug (3), in das geschmolzenes Wachs eingespritzt wird,
**gekennzeichnet durch**
Mittel zum Kühlen der Plastifizier- und Einspritzschnecke (1), wobei diese Mittel aus einer Innenbohrung (4), die in die Plastifizier- und Einspritzschnecke (1) eingearbeitet ist, und aus Zuführ- (5) und Abführleitungen (6) für ein, vorzugsweise flüssiges, Kühlmedium bestehen, und **durch**
einen Kühlkopf (7), der zwischen der Plastifizier- und Einspritzschnecke (1) und dem Spritzgießwerkzeug (3) angeordnet ist und der das aus dem Bereich der Plastifizier- und Einspritzschnecke (1) kommende Wachs mit einem, vorzugsweise flüssigem, Kühlmedium abkühlt, bevor es in das Spritzgießwerkzeug (3) gelangt.

2. Vorrichtung nach Anspruch 1, **dadurch gekennzeichnet, daß** die Länge (L_{B}) der Innenbohrung (4) höchstens 2/3 der Länge (L_{S}) der Plastifizierund Einspritzschnecke (1) beträgt.

3. Vorrichtung nach Anspruch 1 oder 2, **dadurch gekennzeichnet, daß** in den Kühlkopf ein Sieb (8) integriert ist, das das hindurchtretende Wachs filtert, wobei auch das Sieb (8) von dem Kühlmedium gekühlt wird.

4. Vorrichtung nach einem der Ansprüche 1 bis 3, **dadurch gekennzeichnet, daß** die Plastifizier- und Einspritzschnecke (1) eine gehärtete Oberfläche aufweist.

5. Vorrichtung nach einem der Ansprüche 1 bis 4, **dadurch gekennzeichnet, daß** zwischen dem Endbereich der Plastifizier- und Einspritzschnecke (1) und dem Spritzgießwerkzeug (3) eine, vorzugsweise durch Federmittel, vorgespannte Nadelverschlußdüse (9) angeordnet ist, die das in das Spritzgießwerkzeug (3) einzuspritzende Wachs unter einem vorgegebenen Mindestdruck hält.

6. Vorrichtung nach einem der Ansprüche 1 bis 5, **dadurch gekennzeichnet, daß** der Schneckenzylinder (2) Mittel zum Heizen des Schneckenzylinders (2) aufweist, wobei diese Mittel aus Hohlräumen (10) bestehen, die in den Schneckenzylinder (2) eingearbeitet sind, in die ein, vorzugsweise flüssiges, Heizmedium eingeleitet wird, womit der Bereich der Bohrung des Schneckenzylinders (2) auf eine Temperatur, vorzugsweise zwischen 30 °C und 80 °C, aufgeheizt wird.

7. Verfahren zum Feingießen von Formteilen aus Wachs in einer Spritzgießmaschine, die aufweist:
eine Plastifizier- und Einspritzschnecke (1), die in einem Schneckenzylinder (2) rotieren und sich zum Einspritzen von plastifiziertem Wachs axial bewegen kann, und
ein Spritzgießwerkzeug (3), in das geschmolzenes Wachs eingespritzt wird,
**dadurch gekennzeichnet, daß**
die Plastifizier- und Einspritzschnecke (1) einerseits und der Schneckenzylinder (2) andererseits unabhängig voneinander in der Weise in ihrer Temperatur gesteuert oder geregelt werden, daß die Plastifizierund Einspritzschnecke (1) während der Verarbeitung des Wachses zumindest in Teilbereichen der Plastifizier- und Einspritzschnecke (1) wärmer als der Schneckenzylinder (2) oder höchstens gleich wann ist.

## Claims

1. Device for precision casting of mouldings made from wax, which has:
a plastifying and injection screw (1), which can rotate in a screw cylinder (2) and can be moved axially for injecting plastified wax, and
an injection-moulding die (3), into which molten wax is injected,
**characterised by**
means for cooling the plastifying and injection screw (1), wherein these means comprise an inner bore (4), which is incorporated into the plastifying and injection screw (1), and supply (5) and discharge pipes (6) for a, preferably liquid, cooling medium, and by
a cooling head (7), which is arranged between the plastifying and injection screw (1) and the injection-moulding die (3), and which cools the wax coming from the region of the plastifying and injection screw (1) using a, preferably liquid, cooling medium, before it passes into the injection-moulding die (3).

2. Device according to claim 1, **characterised in that** the length (L_{B}) of the inner bore (4) is at the most 2/3 of the length (L_{S}) of the plastifying and injection screw (1).

3. Device according to claim 1 or 2, **characterised in that** a sieve (8), which filters the wax passing through, is integrated into the cooling head, wherein the sieve (8) is also cooled by the cooling medium.

4. Device according to one of claims 1 to 3, **characterised in that** the plastifying and injection screw (1) has a hardened surface.

5. Device according to one of claims 1 to 4, **characterised in that** a needle seal nozzle (9) biased preferably by spring means, which holds the wax to be injected into the injection-moulding die under a preset minimum pressure, is arranged between the end region of the plastifying and injection screw (1) and the injection-moulding die (3).

6. Device according to one of claims 1 to 5, **characterised in that** the screw cylinder (2) has means for heating the screw cylinder (2), wherein these means consist of cavities (10) which are incorporated into the screw cylinder (2), into which a, preferably liquid, heating medium is introduced, as a result of which the region of the bore of the screw cylinder (2) is heated at a temperature, preferably between 30°C and 80°C.

7. Process for precision casting of mouldings made from wax in an injection-moulding machine, which has:
a plastifying and injection screw (1), which can rotate in a screw cylinder (2) and can be moved axially for injecting plastified wax, and
an injection-moulding die (3), into which molten wax is injected,
**characterised in that**
the temperatures of the plastifying and injection screw (1) on the one hand and the screw cylinder (2) on the other hand are controlled or regulated independently of one another, such that the plastifying and injection screw (1) is warmer than the screw cylinder (2) or at the most is equally warm during processing of the wax at least in some regions of the plastifying and injection screw (1).

## Revendications

1. Dispositif pour le moulage de précision de pièces en cire, qui présente :
une vis de plastification et d'injection (1) qui peut tourner dans un cylindre (2) et se déplacer axialement pour l'injection de cire plastifiée, et
un moule d'injection (3) dans lequel de la cire fondue est injectée,
**caractérisé par**
des moyens de refroidissement de la vis de plastification et d'injection (1), ces moyens étant constitués d'un alésage intérieur (4) fait dans la vis de plastification et d'injection (1) et de conduites d'amenée (5) et d'évacuation (6) pour un agent de refroidissement de préférence liquide, et
une tête de refroidissement (7) qui est placée entre la vis de plastification et d'injection (1) et le moule d'injection (3) et refroidit la cire venant de la zone de la vis de plastification et d'injection (1) avec un agent de refroidissement de préférence liquide avant qu'elle arrive dans le moule d'injection (3).

2. Dispositif selon la revendication 1, **caractérisé par le fait que** la longueur (L_{B}) de l'alésage intérieur (4) est d'au plus 2/3 de la longueur (L_{S}) de la vis de plastification et d'injection (1).

3. Dispositif selon l'une des revendications 1 et 2, **caractérisé par le fait qu'**à la tête de refroidissement est intégré un tamis (8) qui filtre la cire qui passe, ce tamis (8) aussi étant refroidi par l'agent de refroidissement.

4. Dispositif selon l'une des revendications 1 à 3, **caractérisé par le fait que** la vis de plastification et d'injection (1) présente une surface durcie.

5. Dispositif selon l'une des revendications 1 à 4, **caractérisé par le fait qu'**entre la partie d'extrémité de la vis de plastification et d'injection (1) et le moule d'injection (3) est placée une buse à fermeture par pointeau (9) précontrainte de préférence par des moyens élastiques qui maintient sous une pression minimale fixée la cire à injecter dans le moule d'injection (3).

6. Dispositif selon l'une des revendications 1 à 5, **caractérisé par le fait que** le cylindre à vis (2) présente des moyens de chauffage de celui-ci, ces moyens étant constitués d'espaces vides (10) faits dans le cylindre à vis (2) et dans lesquels est envoyé un agent de chauffage de préférence liquide avec lequel la zone de l'alésage du cylindre à vis (2) est chauffée à une température de préférence comprise entre 30 °C et 80 °C.

7. Procédé de moulage de précision de pièces en cire dans une machine de moulage par injection qui présente :
une vis de plastification et d'injection (1) qui peut tourner dans un cylindre (2) et se déplacer axialement pour l'injection de cire plastifiée, et
un moule d'injection (3) dans lequel est injectée de la cire fondue,
**caractérisé par le fait que**
la vis de plastification et d'injection (1) d'une part et le cylindre à vis (2) d'autre part sont commandés ou régulés en température indépendamment l'un de l'autre de façon que pendant la mise en oeuvre de la cire, la vis de plastification et d'injection (1) soit, au moins dans certaines parties, plus chaude ou au moins aussi chaude que le cylindre à vis (2).
